# EUROPEAN PATENT SPECIFICATION

(11) **EP 3 062 482 B1**
(45) Date of publication and mention of the grant of the patent: **11.04.2018**
(21) Application number: 15156790.6
(22) Date of filing: 26.02.2015
(51) Int. Cl.: H04L 29/08, H04W 4/00, H04L 29/06, H04N 21/2343, H04N 21/24, H04N 21/258, H04N 21/262, H04N 21/2662, H04N 21/433, H04N 21/6543

(54) **METHOD, DEVICE AND SYSTEM FOR WIRELESS HIGH SPEED DATA PICK UP**
VERFAHREN, VORRICHTUNG UND SYSTEM ZUR DRAHTLOSEN HOCHGESCHWINDIGKEITS-DATENAUFNAHME
PROCÉDÉ, DISPOSITIF ET SYSTÈME DE COLLECTE SANS FIL DE DONNÉES À HAUTE VITESSE

(43) Date of publication of application: 31.08.2016
(73) Proprietor: Deutsche Telekom AG, 53113 Bonn (DE)
(72) Inventor: Kraus, Josef, 64807 Dieburg (DE); Grigat, Michael, 64372 Ober-Ramstadt (DE); Kadel, Gerhard, 64293 Darmstadt (DE)
(74) Representative: Vossius & Partner Patentanwälte Rechtsanwälte mbB

(56) References cited:
- EP-A1- 2 595 403
- EP-A2- 1 420 593
- WO-A1-2012/113460
- US-A1- 2008 235 191
- US-A1- 2012 317 194
- US-B1- 7 072 932
- US-B1- 8 412 798
- US-B2- 7 908 636

## Description

### BACKGROUND

The present invention is related to wireless high speed data pick up with a mobile device from a caching device in a home network.

The digitization of all kind of information and entertainment media, such as newspapers, magazines, books, photographs, films etc. has been a huge global trend during the last two decades. In the future, digitization will play an even more important role in all areas of private life (e.g. smart home, digital payment, eHealth, eGovernment, etc.) and in all industry segments (e.g. process automation, Industry 4.0. etc).

Different devices for dynamic storage of digital media (e.g. network attached storage - NAS, set-top boxes) are already available. More and more, media are not only consumed on stationary large screens such as computer monitors or TV screens, but also on portable "smart" devices, in particular on all kind of tablets and smart phones.

The opportunity of using portable devices for media consumption is that the user can use it not only at home, but also on the move, for example while commuting to and from work by train or bus. In that respect, reading an electronic newspaper on a tablet in a train is a digital substitute for reading a conventional printed newspaper.

Currently, in most cases consumption of digital content takes place online by using web browsers or dedicated applications ("apps"). This requires an online connection of the smart device with sufficient data rates in order to avoid long waiting times (e.g. for opening a digital newspaper or for scrolling from one page to another one) or to avoid stuttering video transmission. The bandwidth demand for online consumption of digital media will increase in the future because of higher content quality, e.g. higher video resolution to utilize high screen resolution of the devices.

The online connection of a smart device can be realized via different wireless media, e.g. via Wi-Fi at home (with DSL-, coax-cable- or fiber-based internet connection from the Wi-Fi access point to the Internet) or via cellular networks while on the move. However, in some scenarios, the bandwidth of the online connection might not be sufficient for a satisfying online consumption of digital media, e.g. while travelling in a train.

In such a situation, a manual pre-loading of content to the portable device (e.g. at home) might be a solution, however, this requires several manual actions of the user (e.g. browsing to a web page, authentication at the web page, selecting content, selecting location where to store content, start downloading, etc.) and it may take significant time until the pre-loading of the content is completed.

In the meantime several technologies or techniques have been developed or specified at industry organizations or standardization bodies, which can become the basic elements for more advanced and more convenient methods for content provisioning and picking-up the content with portable devices. Some of these technologies or techniques are:
▪ Wi-Fi and WLAN based on IEEE802.11-2012, (IEEE-Computer-Society, "IEEE Standard for Information technology- Telecommunications and information exchange between systems- Local and metropolitan area networks - Specific requirements Part 11: Wireless LAN Medium Access Control (MAC) and Physical Layer (PHY) Specifications", IEEE Standards Association, 2012)
▪ Wi-Fi Peer-to-Peer, (Wi-Fi Alliance Technical Committee - P2P Task Group, "Wi-Fi Peer-to-Peer (P2P) Technical Specification", 2010)
▪ Wi-Fi certified ac corresponding to IEEE802.11ac, (IEEE Standard for Information technology -- Telecommunications and information exchange between systems -- Local and metropolitan area networks-- Specific requirements--Part 11: Wireless LAN Medium Access Control (MAC) and Physical Layer (PHY) Specifications --Amendment 4: Enhancements for Very High Throughput for Operation in Bands below 6 GHz); and
   (Wi-Fi Alliance, https://www.wi-fi.org/discover-wi-fi/wi-fi-certified-ac)
▪ WiGig corresponding to IEEE802.11 ad, (IEEE Standard for Information technology --Telecommunications and information exchange between systems --Local and metropolitan area networks -- Specific requirements-Part 11: Wireless LAN Medium Access Control (MAC) and Physical Layer (PHY) Specifications Amendment 3: Enhancements for Very High Throughput in the 60 GHz Band); and (Wi-Fi Alliance, https://www.wi-fi.org/discover-wi-fi/wigig-certified)
▪ Fast initial set-up of WLAN based on IEEE802.11ai specifications (P802.11ai - IEEE Draft Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications: Amendment- Fast Initial Link Setup)
▪ TransferJet (TranferJet, http://www.transferjet.org/tj/tj_spec.html)
▪ Bluetooth Low Energy, Bluetooth Smart (http://www.bluetooth.com/Pages/Bluetooth-Smart.aspx)
▪Near Field Communication including connection handover (NFC, Forum Connection Handover Technical Specification: http://members.nfc-forum.org/specs/spec_list/
   New version 1.3: http://members.nfc-forum.org/specs/spec_dashboard/)
▪ Wi-Fi Aware (Draft described in: Wi-Fi NAN Technical Specification DRAFT v0.0.24, https://www.wi-fi.org/wi-fi-nan-technical-specification-draft-v0024)
▪ Embedded SIM card
▪ Digital right management
▪ Content delivery networks
▪ Superfast boot technologies (http://www.makelinux.com/emb/fastboot/omap)
▪ eInk Displays, (http://www.eink.com)

Furthermore, first storage devices with wireless connectivity arrived on the market or were prototypically developed, but they do not fulfill all required features for content pick up with portable devices regarding speed, functionality, or usability (Nurido, http://www.nurido.eu/2274-im-test-sandisk-connect-wireless-flash-drive-der-wlan-usb-stick-f uer-iphone-ipad-sowie-android-kindle-fire-geraete/); and (Engadget,
http://www.engadget.com/2012/01/30/wigig-sd-card-gets-demoed-on-tablets-makes-dvds-gon e-in-60-seco/). Patent Application US 2008/235191 discloses a storage bubble which automatically downloads music from an Internet Service according to the user's profile. The profile for data to download is periodically updated. A profile update triggers download of new content. Therefore, based on some of the above mentioned technologies and techniques there is a need for an overall method, system and device specially adjusted to the use case of fastest content provisioning to pick up the content with portable devices.

### SUMMARY

The object of the invention is to provide a method, a system and a device for wireless high speed data pick up with a portable device from a caching device. The object is achieved with the features of the independent claims. The dependent claims relate to further aspects of the invention.

According to a first aspect of the present invention there is provided a method for wireless high speed data pick up with a portable device from a caching device comprising the steps of: (a) initializing a data transfer between the portable device and the caching device; (b) activating the caching device triggered by the initialization of step (a) by using a wireless short range low power technology; (c) establishing a wireless connection, preferably having Gbit/s or Multi-Gbit/s throughput capacity, between the portable device and the caching device for data transfer; and (d) transferring the data from the caching device to the portable device using the wireless connection established in step (c), wherein the data is composed and adapted individually according to a dedicated user order by a content broker or content composition platform.

Preferably, initializing a data transfer is performed by the portable device automatically at a predetermined time and/or in response to a single operation on or with the portable device by a user.

The wireless short range low power technology for activating the caching device is preferably at least one of Near Field Communication, Bluetooth Low Energy, iBeacon, low power variants of Wi-Fi, a wireless sensor network and an active or passive RFID technology.

Preferably, activating the caching device with the wireless short range low power technology includes performing service discovery or position information tasks and more preferably further comprises the step of identifying the user.

In addition, initializing a data transfer can be performed by the portable device by approximation of the portable device to the caching device using at least one of Near Field Communication technology, Bluetooth Low Energy, iBeacon, low power variants of Wi-Fi, a wireless sensor network, and active or passive RFID technology.

Preferably, transferring the data from the caching device to the portable device includes transferring of corresponding credentials for the user to access the transferred data and preferably includes a step of deactivating the caching device after transferring the data to the portable device.

According to a second aspect of the invention there is provided a system for data pick up with a portable device from a caching device, the system being configured to perform the method according to the first aspect.

According to a third aspect of the present invention there is provided a method for data download from a content adaptation and delivery platform to a caching device, comprising the steps of: (a) activating a host device automatically at a predetermined time; (b) downloading data from the adaptation and delivery platform by means of the host device; (c) transferring the downloaded data from the host device to the caching device; and (d) storing the data on the caching device.

Preferably, after activating the host device the method further comprises the step of receiving information about at least one working timer transmitted from and scheduled by the content adaptation and delivery platform, wherein each working timer is assigned to one specific data.

The method preferably further comprises a step of transferring corresponding credentials for the user to access the data from the content adaptation and delivery platform by the host device and subsequently storing on the caching device.

Preferably, after storing the data on the caching device, the method further comprises a step of deactivating the host device and the caching device, wherein more preferably transferring the downloaded data from the host device to the caching device is done via a wired connection or a wireless connection.

Preferably, the method for data download from a content adaptation and delivery platform to a caching device is performed at predetermined times, preferably times with low traffic on an operator network.

According to a fourth aspect of the present invention there is provided a system for data download from a content adaptation and delivery platform to a caching device, the system being configured to perform the method according to the third aspect.

According to yet a fifth aspect of the present invention there is provided a method for data composition by a content composition platform based on a user order with a content broker or a content composition platform, comprising the steps of: (a) gathering of data according to the user's order with the content broker or the content composition platform, wherein the data is obtained from at least one content provider and/or publically available content sources; and (b) transferring the data to a content adaptation and delivery platform.

Preferably, the method further comprises the step of adapting the data by the content adaptation and delivery platform, to the capability of the user's access network and/or the capability of a user's portable device and preferably includes packing the data or parts of it into several container files, and more preferably wherein the container files are buffered at storage equipped nodes of the content adaptation and delivery platform and scheduled for download by the content adaptation and delivery platform and/or wherein adapting the data preferably includes transcoding the data.

The data is preferably adapted by the content adaptation and delivery platform to the capability of the user's access network and/or the capability of a user's portable device and preferably includes packing the data or parts of it into several container files.

Furthermore, the container files are preferably be buffered at storage equipped nodes of the content adaptation and delivery platform and scheduled for download by the content adaptation and delivery platform.

Preferably, gathering of the data is based on diverse rules defined by the user directly at the content broker and/or extracted by the content adaptation and delivery platform taking into account a user technology environment and provided to the content broker or content composition platform. The user technology environment preferably comprises user devices and access technology.

In addition, the data transfer from the content broker and/or the composition platform to the content adaptation and delivery platform is preferably performed through a high bandwidth fixed network, and wherein the content adaptation and delivery platform preferably generates corresponding credentials for the later use of the data.

According to a sixth aspect of the present invention there is provided a system for data composition by a content composition platform based on a user order with a content broker, the system being configured to perform the method according to the fifth aspect.

According to a seventh aspect of the present invention there is provided a method for content data ordering by a user at a content broker or composition platform, comprising the steps of: (a) establishing a connection to the content broker or the composition platform; (b) initializing of a user relation of the user at the content broker or the composition platform; (c) composing the data of the order by the user supported by the content broker or the composition platform and at least one content provider; (d) ordering the composed data at the content broker or the composition platform.

Preferably, connecting of a user device comprises providing a user relation and more preferably performing the underlying connection to the content broker or the content composition platform by means of a portable device or any other device with online connectivity.

The user relation is preferably subsequently defined by at least one of a fixed line identifier, a host device identifier, a caching device identifier, addresses, types or identifiers of a portable device, and preferably by the use of a subscriber identity module or similar component or a card integrated or attached to the respective device.

The content data is preferably provided from different content providers and preferably the order is personalized for a specific user and more preferably composed of several content data.

According to a eighth aspect of the present invention there is provided a system for data ordering by a user at a content broker or content composition platform, the system being configured to perform the method according to the seventh aspect.

According to a ninth aspect of the present invention there is provided a method according to the first aspect, the method being combined with the method according the third aspect, and/or the method according to the fifth aspect, and/or the method according to the seventh aspect.

According to a tenth aspect of the present invention there is provided a system according to the second aspect, the system being combined with the system according the fourth aspect, and/or the system according to the sixth aspect, and/or the system according to the eighth aspect.

The content broker as used herein can be understood as a system having a function for sales and distribution between different content owner/provider and the content user. The content broker can also be a system for operating the content composition platform. Examples for content owners/providers are publishers, news-agencies, television broadcasting companies, event managing companies, movie production companies etc. Examples for content broker systems are online store systems (e.g. Amazon), online book store systems, online video rental store systems (e.g. having different content as movies, series, documentaries, music shows, children movies or shows etc.) and so on.

The content composition platform can be for example a system preferably software at a computer center, that collects and merges contents from different content owners/providers according to the user's online order. The user's order (also a subscription) could be made for one working day with the following content: Daily news show, basketball sport news, the economy part of a newspaper as a .pdf-document. According to the user's specification the order can be split in several container files and subsequently forwarded to the content adaption and delivery platform.

According to a eleventh aspect of the present invention there is provided a caching device for providing of content data to be picked up by a portable device through a high-speed wireless connection, the caching device comprising at least one of the following a controller and a processor; a main volatile memory, preferably a DDR3 type memory; a non-volatile program and system memory, preferably adapted for fast set-up time; a content data memory, preferably a flash memory with several tens of GByte capacity with a hardware architecture adapted for high speed access; a rechargeable battery; a battery management module for battery and other supply line voltage monitoring; a transport radio module with very high throughput, preferably Gbit/s or Multi Gbit/s WLAN based on IEEE 802.11ac or IEEE 802.11 ad; and an activation radio, preferably Near Field Communication and/or Bluetooth Low Energy, and/or iBeacon, and/or low power variants of Wi-Fi, and/or a wireless sensor network, and/or an active or passive RFID technology.

Preferably, the caching device further comprises a socket or plug connector with a cable for wired connection and the caching device preferably further comprises a subscriber or device identity component.

Furthermore, the caching device is preferably connected with a host device by a wire or a wireless connection and wherein the caching device is optionally installed in a home network.

Preferably, the caching device is powered by the rechargeable battery during times of the content data pick-up and/or times where no content data pick-up is performed.

The caching device preferably receives electrical power during a phase of content data download by the host device using the wired connection cable and in addition charging the rechargeable battery.

Preferably, the rechargeable battery is charged by a combination of the host device and a main plug, and/or wherein the host device is preferably configured to extend the content data download phase to further charge the battery or define a timer for further battery charge at a later time.

The caching device is preferably a hardware and/or software module that is integrated in a host device and preferably shares hardware components with other devices.

Furthermore, the caching device is preferably used as a wireless repeater or a radio transceiver with very high throughput, preferably when the host device is switched on for its normal operation (e.g. TV, Internet radio).

Additionally, the caching device is preferably adapted to copy its content data to a remote data center to enable access to the content data of the caching device with the portable device on the move, e.g. in hotspots. Furthermore, for this purpose the system and methods according to aspects one to ten are preferable adapted to build a virtual copy of the caching device in a remote data center whereby the content data are directly transferred from the content broker or the composition platform to this virtual copy to avoid the upload of the content data from the caching device.

According to a twelfth aspect of the present invention there is provided a software component implementing the method according to the first aspect, and/or the method according to the third aspect, and/or the method according to the fifth aspect, and/or the method according to the seventh aspect; or implementing the system according to the second aspect, and/or the system according to the fourth aspect, and/or the system according to the sixth aspect, and/or the system according to the eighth aspect.

The invention features a couple of general advantages, especially by the promotion of the transition to digital content data. The present invention avoids the above described limitations of content consumption on portable devices and offers an attractive solution to pick up and consume content (also referred to as data or content data hereinafter) with portable devices in a very easy and efficient way. It is hassle-free for the user - as easy as picking a printed newspaper out of the post box.

It has a simple and conversant mind model which combines the timer controlled recording of television programs on set-top boxes with hard disks or other recorders and emulates in the successive step the newspaper carry out and the take along of the newspaper e.g. to a bus or railway trip.

In some variants the content transfer to the portable device is initiated by fast activation of a caching device by a herein named activation radio, e.g. NFC (Near Field Communication) or Low Power Bluetooth. The content transfer is then performed by use of Gigabit-WLAN. By a simple "Touch and Get" usage it will be possible to transfer huge file sizes, e.g. one GByte, in a total time of a few seconds.

For example, the invention combines methods and devices in an optimized way for freshest (fastest) content provisioning to pick up the content with portable devices. In addition, the present invention is ecologically friendly since it avoids the production and transport of printed paper. Moreover, the present invention conserves power at the portable device since the total active time of the portable device to perform the use case is very short. Furthermore, the targeted Gigabit-WLAN technologies are very energy efficient related to the consumed power per transported bit. Additionally, content ordering or subscription can be adapted very flexible and the caching device can contain means to handle potential subscriptions for the user in an easy way. Thus, according to the present invention the content can be much more up-to date and can be richer (e.g. embedded videos) and the content download to a caching device at times with low traffic on the operator network unloads the operator network in busy hours.

### BRIEF INTRODUCTION OF THE DRAWINGS

FIG. 1 illustrates one preferred embodiment of the present invention.
FIG. 2 illustrates the components of the caching device according to one embodiment of the present invention.
FIG. 3 illustrates the caching device according to one embodiment of the present invention.

### DETAILED DESCRIPTION OF PREFERRED EMBODIMENTS

Some preferred embodiments are now described with reference to the drawings. For explanation purpose, various specific details are set forth, without departing from the scope of the present invention as claimed.

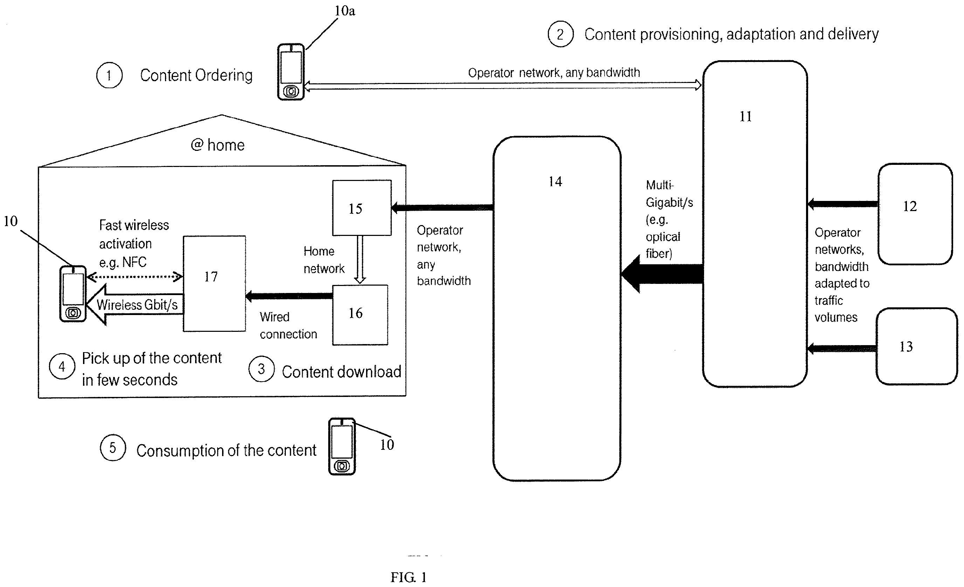

Fig. 1 illustrates the basic concept of the present invention according to one exemplary embodiment. In particular, Fig. 1 shows a portable device 10, 10a (e.g. a mobile phone, a tablet, a laptop etc.), a content broker or composition platform 11, a content provider 12, a public content module 13 (e.g. the world wide web), a content adaption and delivery platform 14. Fig. 1 further shows within a home environment a home gateway 15, a host device 16, a caching device 17.

The basic method and approach for fast content (also referred to as data or content data hereinafter) provisioning and pick up of the content with portable devices might be described by the following five steps as illustrated in Fig. 1 with encircled reference numerals 1 to 5:
1. Content ordering including initialization of the customer relation at a content broker or at a content composition platform 11 by portable device 10a;
2. content provisioning, adaptation and delivery by a corresponding platform, e.g. the content adaption and delivery platform 14, based on the utilization of an operator network;
3. content download with the inclusion of a home gateway 15 to a caching device 17 (or caching module) which is wired or wireless connected to or integrated in a host device 16;
4. content pick up with a portable device 10 from the caching device 17 by use of a Gbit/s or Multi-Gbit/s wireless technology;
5. content consumption independent from connection to an operator network on the portable device.

Although portable device 10 and 10a illustrated in Fig. 1, can be one and the same portable device it is clear that different portable devices can be used in the different steps. For example, a user might order the content in step 1 with his/her mobile phone 10a, whereas the content pick up or consumption is then done on his/her tablet 10. Other combinations of portable devices are possible as well. Fig. 1 shows an exemplary implementation of such a method and system for a consumer in a home scenario and illustrates the underlying principle. The above mentioned steps are subsequently explained in more detail with reference to Fig. 1.

### 1. Content ordering:

The content is ordered at a content broker or composition platform 11 or directly at a content provider 12. Thereby, the user can use his portable device 10a or any other device with online connectivity. The order can be made personalized and may be composed of several content items from different content providers 12 with different content types (newspaper, magazine, TV show, movie, etc.) or multimedia types (text, pictures, audio, video, etc.). A corresponding content broker or composition platform 11 will support the user to select and compose his content individually.

### a) Initialization of the customer relation:

For the initialization of the customer relation it is advantageous to identify and involve one or more of the used items of the consumer sphere which is at the download sink side. For example these items may be: Fixed line identifier, host device identifier, caching device identifier, addresses, types or identifiers of the portable devices 10a. A relationship between the initial first content ordering and one or more of the consumer devices involved in the download process (host device 16, caching device 17, portable device 10) may be established. Furthermore, to define this relationship a subscriber identity module (e.g. embedded SIM) or similar component or card integrated or attached to the caching device 17 may be used. The established relationship can then be used for recurring content provisioning commonly used in subscription models.

### 2. Content provisioning, adaptation and delivery by corresponding platforms based on the utilization of an operator network

The content broker or composition platform 11 will provide the content for the order. It obtains the content from different content providers 12 or publically available content sources (or content modules) 13. This platform 11 composes the content for the customer, whereby the content composition can be based on diverse rules. Examples for such rules are:
▪ content delivery to the caching device 17 before a defined point in time;
▪ newscast not older than 2 hours with respect to a defined point in time;
▪ sport clips not older than 24 hours and only if teams of German soccer league are involved;
▪ randomly selected music from a defined category e.g. oldies originated between 1970 and 1990 not more than 15 minutes in total;
▪ data volume to be delivered not more than a defined amount e.g. 2 GByte.

Then, by use of high bandwidth fixed network e.g. optical fiber, the content is transferred to the content adaptation and delivery platform 14. There the content may be transcoded for portable devices defined during the initialization of the customer relation and may be adapted to the capability of the customer's access network, e.g. by selection of an appropriate video resolution. The content may be subject to digital right management procedures aware of the content type or momentariness and the context the customer will consume the content. If required corresponding credentials for the later consumption of the content can also be generated. The content may be packed in several container files to enable a partially download at different times or to assign the content to different persons of the household. This approach also facilitates the control and adaptation of the download process to the network load. The content may be buffered at storage equipped nodes in the operator network which especially is useful if a lot of customers want to get the same content e.g. a regional newscast or newspaper. Finally the content parts or the corresponding container files are scheduled for download by the content adaptation and delivery platform 14. Therefore, this platform optimizes content buffering at the network cache storages, delivery scheduling and network load distribution based on consumer pre-settings (e.g. number of subscriptions for the different contents).

The real download of each content part or container file is then triggered by a host device 16 in cooperation with the content adaptation and delivery platform 14. The host device 16 is a consumer device with a timer controlled recording or storage function on an external storage or memory device herein called caching device. Potential host devices which can be extended by some for the method necessary functionalities are: residential gateways, set-top boxes, smart TVs, Internet radios, smart home gateways, media server etc.. A special caching device for the method is part of the invention and is described subsequently.

### 3. Content download to a caching device 17 with the aid of a host device 16:

The host device 16 will activate itself at a given time by a first initial timer e.g. at night. After activation it will get a set of working timers from the content adaptation and delivery platform 14, one working timer for each assumed container file. Based on the working timers the host device 16 is activated and downloads the container files from the content adaptation and delivery platform 14 and stores the content at the caching device 17. If necessary corresponding credentials to consume the content are also transferred to the caching device 17. After each download process the host device 16 and the caching device 17 return to their low power stand-by mode. If the caching device 17 is wired connected to the host device 16 e.g. by means of USB it is not supplied with power over this connection during the stand-by mode of the host device 16.

### 4. Content pick up:

The user activates the caching device 17 e.g. with help of an activation radio by a single click on his portable device 10 and/or approximation of the portable device 10 to the caching device 17, if for example NFC is used. The activation radio can further serve to disclose the user identity, if several person of the household utilize the same caching device. Furthermore, this step shall ensure that the portable user device 10 is in close range to the caching device 17 with excellent reception of an additional wireless connection to be established immediately. This wireless connection, which is named transport radio, shall have Gbit/s or Multi-Gbit/s throughput capacity (e.g. Wi-Fi based IEEE 802.11ac or WiGig based on IEEE 802.11ad) and will be used to transport the content from the caching device 17 to the portable device 10. Credentials to consume the content may also be transferred to the portable device 10 with the help of the transport radio. If necessary the credentials may be adapted before the transfer by the caching device 17. After completion of the content transfer the caching device 17 returns to stand-by mode.

### 5. Content consumption:

The content and potentially for the content consumption required credentials are now available on the portable device 10 and the content can be consumed everywhere especially at locations with no or poor network connectivity. For the content consumption standard software shall be used.

In the following one exemplary embodiment of a caching device 17 is described in more detail, which is completely supporting the above outlined general method of the present invention. The caching device 17 is herein after named eContent tube 17. It can be seen as the electronic form of a paper tube and emulates the newspaper carry out and the take along of the newspaper e.g. to a bus or railway trip.

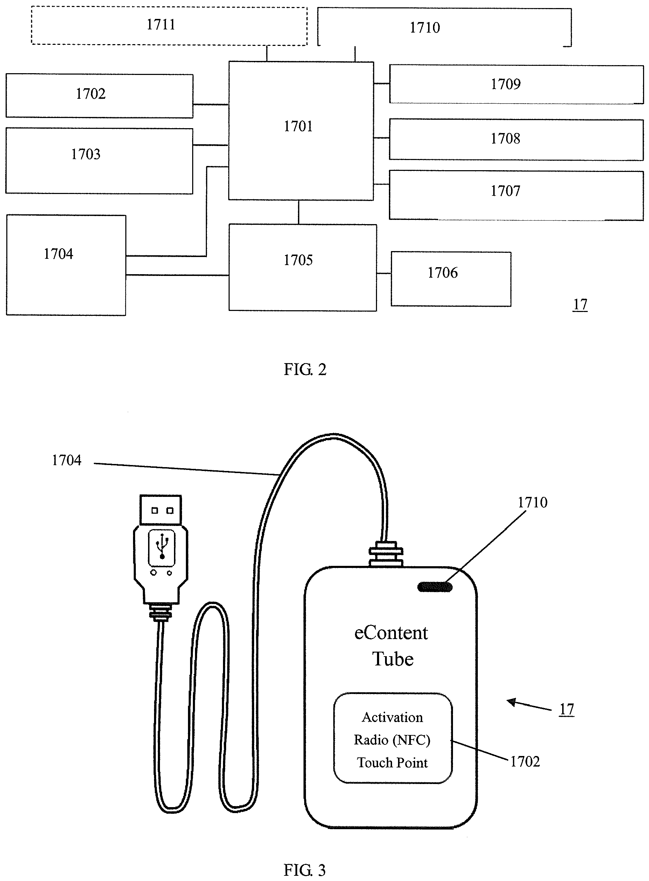

The eContent tube 17 is a memory device to enable a content pick up for portable devices 10 before leaving the consumers home. The eContent tube 17 shall work for any type of content and is a hardware component for a system based on the above described method for fast content provisioning to pick up the content with portable devices 10. A schematic block diagram of the eContent tube 17 is shown in Fig. 2. Its hardware consists of following components: a controller and a processor 1701; main and volatile memory 1709, e.g. DDR3; non-volatile program and system memory 1708, e.g. NOR Flash for fast set-up time; content memory 1707 e.g. flash memory with several or several tens of GByte with a hardware architecture optimized for high speed access; rechargeable battery 1706; battery management module 1705 for, battery and other supply line voltage monitoring; socket or plug connector 1704 with cable for wired connection (incorporating power supply), e.g. USB 2.0 or 3.0; transport radio module 1703, e.g. Gbit/s or Multi Gbit/s WLAN based on IEEE 802.11ac or IEEE 802.11 ad (WiGig); activation radio 1702, e.g. NFC or Bluetooth Low Energy; and optional a subscriber or device identity component 1711, e.g. embedded SIM card (optional). Referring to Fig. 2 and Fig. 3, the eContent tube 17 is connected by a wired connection 1704, preferable by use of USB 2.0 or 3.0, to the host device 16. To establish a customer relation the eContent tube 17 may optionally contain a subscriber identity module 1711 (e.g. embedded SIM) or similar component or may involve such a component present in the host device 16.

### Content Download:

The host device 16 can download content over a wide area network from a content provider 12, content broker 11 or the Internet 13 and store the content on the eContent tube 17 using the wired connection 1704. Typically this process will be done late at night or in the early morning hours under the control of pre-set and network administrated timers. In this phase the eContent tube 17 behaves like a USB connected external storage device. After the download the host device 16 and the eContent tube 17 can return to a stand-by mode. If the necessary functionalities on the host device 16 are not installed by factory, it should be possible to implement them by software update. The download process and the availability of new content can be visually indicated e.g. by LEDs 1710 at the eContent tube 17.

### Content pick up by a portable device 10:

To initialize a content transfer (content pick up) from the eContent tube 17 to a portable device 10 (tablet, smart phone, ebook reader etc.), the portable device 10 shall activate the eContent tube 17 by a wireless short range low power technology (e.g NFC, Bluetooth Low Energy, iBeacon, low power variants of Wi-Fi, wireless sensor networks etc.). This radio can be denoted as activation radio 1702. The activation radio 1702 triggers immediately the establishment of a further wireless connection (transport radio 1703) which shall support Gbit/s or Multi Gbit/s data rate. Besides the awakening of the eContent tube 17 the activation radio 1702 may be used to exchange necessary credentials and parameters to establish the transport radio 1703 connection. Both, the activation radio 1702 or the transport radio 1703, are potential ways to exchange additional credentials for the consumption of the content on the portable device 10 later-on. Candidates for the transport radio 1703 are, for instance, WLAN IEEE 802.11ac, IEEE 802.11ad (WiGig), UWB (Ultra-wideband) or other very high throughput technologies in frequency bands above 6 GHz or in the THz frequency range. During content pick up the host device 16 typically stays in standby mode and does not provide any service for the consumer.

### Power Supply:

During the content download phase the eContent tube 17 gets its power from the host device 16 using the wired connection cable 1704 (e.g. power over USB). At this time also the rechargeable battery 1706 is loaded. If the time to the download phase is not sufficient to recharge the battery 1706 to a defined level, the host device 16 can extend the download phase for battery charge only or define a further timer for battery charge.

During the pick-up-phase and its own stand-by phase the eContent tube 17 is preferably powered by the rechargeable battery 1706, and during these times the host device 16 is typically in stand-by and does not supply power over the wired connection 1704.

### Design for fast set-up and operation:

To achieve best performance, which means that the overall process for content pick up should be completed within a few seconds, the hard and software components and architectures must be selected and designed carefully for both the portable device 10 and the eContent tube 17:
The user interfaces should be fast and simple e. g. "Touch & Get". Corresponding solutions can be based on use of an activation radio or timers.

Gigabit WLAN technologies based on IEEE802.11ac and IEEE802.11ad offer several technology options like peer-to-peer connections (Wi-Fi Alliance Technical Committee - P2P Task Group, "Wi-Fi Peer-to-Peer (P2P) Technical Specification", 2010). The best options of new service or network discovery possibilities for the described method should preferably be selected. One candidate for service or network discovery is the newly defined Wi-Fi Aware technology (Draft described in: Wi-Fi NAN Technical Specification DRAFT v0.0.24, https://www.wi-fi.org/wi-fi-nan-technical-specification-draft-v0024)

Preferably, no long boot or set-up processes should be allowed to take place. Set-up time until the content pick up starts should preferably be below 1 second. Suitable means are fast boot techniques (http://www.makelinux.com/emb/fastboot/omap) and adapted memory selection and memory architectures e.g. NOR flash memory and, for the transport radio, fast initial set-up (P802.11ai - IEEE Draft Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications: Amendment- Fast Initial Link Setup) and fast session transfer (IEEE Standard for Information technology --Telecommunications and information exchange between systems --Local and metropolitan area networks -- Specific requirements-Part 11: Wireless LAN Medium Access Control (MAC) and Physical Layer (PHY) Specifications Amendment 3: Enhancements for Very High Throughput in the 60 GHz Band).

The content flash memory should preferably support access speed with several Gbit/s and may make use of parallel processing architectures if necessary.

While the invention has been illustrated and described in detail with reference to the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. For example, the caching device 17 (eContent tube) may not be a separate device. It can be integrated e.g. as a module in the host devices 16 like residential gateways, set-top boxes, smart TVs, Internet radios, smart home gateways, media server etc.

Another alternative will be its integration with other memory devices used for timer controlled download like USB-hard-disks or memory sticks. Furthermore, to perform a content transfer (content pick up) from the eContent tube 17 to a portable device 10 (tablet, smart phone, ebook reader etc.), both the portable device 10 and the eContent tube 17 might be activated by a timer at a given time. The activation radio is not necessary or is not be used then. Moreover, the eContent tube 17 can also be operated as cache storage in upload direction (e.g. for data upload to a remote data center). If the host device 16 is switched on for its normal operation (TV, Internet radio), the eContent tube 17 can also serve the wireless home network e.g. as a repeater or a WiGig radio transceiver. Furthermore, the eContent tube 17 may have a virtual copy or clone at a remote data center (cloud), which contains the same content as the eContent tube 17 at home. This enables access to the same content on the move, e.g. in hotspots.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

The invention provides a method and system for wireless high speed data pick up with a portable device from a caching device; a method and system for data download from a content adaptation and delivery platform to a caching device; a method and system for data composition by a content composition platform based on a user order with a content broker or a content composition platform; and a method and system for content data ordering by a user at a content broker or composition platform or a combination thereof. In addition, it is provided a caching device for providing of content data to be picked up by a portable device through a high-speed wireless connection. The described methods and systems can be combined to an overall method and/or system for end-to-end delivery from a content provider to a portable user device.

## Claims

1. A method for fast content provision and wireless high speed data pick up with a portable device (10, 10a) from a caching device (17) comprising the steps of:
a) content data ordering by a user from a content broker or composition platform (11), comprising the steps of:
i. establishing a connection to the content broker or the composition platform (11);
ii. initializing of a user relation of the user at the content broker or the composition platform (11);
iii. composing data of an order by the user supported by the content broker or the composition platform (11) and at least one content provider (12);
iv. ordering the composed data from the content broker or the composition platform (11);
b) data composition by the composition platform (11) based on the user order with the content broker or the composition platform (11), comprising the steps of:
i. obtaining data according to the user's order with the content broker or the composition platform (11), wherein the data is obtained from the at least one content provider (12) and/or publically available content sources (13); and
ii. transferring the data to a content adaptation and delivery platform (14);
iii. adapting the data by the content adaptation and delivery platform (14);
c) data download from the content adaptation and delivery platform (14) to a caching device (17), comprising the steps of:
i. activating a host device (16) automatically at a predetermined time;
ii. downloading the adapted data from the content adaptation and delivery platform (14) by means of the host device (16);
iii. transferring the downloaded data from the host device (16) to the device (17); and
iv. storing the downloaded data on the caching device (17); and
b) wireless high speed data pick up, comprising the steps of:
i. initializing a data transfer between the portable device (10, 10a) and the caching device (17);
ii. activating the caching device (17) triggered by the initialization of step by using a wireless short range low power technology;
iii. establishing a wireless connection, preferably having Gbit/s or Multi-Gbit/s throughput capacity, between the portable device (10, and the caching device (17) for data transfer; and
iv. transferring the stored downloaded data from the caching device (17) to the portable device (10, 10a) using the wireless connection established in step iii., wherein the stored downloaded data is composed and adapted individually according to steps a) to c) by the content broker or the content composition platform (11).

2. The method according to claim 1, wherein initializing a data transfer is performed by the portable device (10, 10a) automatically at a predetermined time and/or in response to a single operation on or with the portable device (10, 10a) by a user.

3. The method according to claim 1 or 2, wherein the wireless short range low power technology for activating the caching device (17) is at least one of Near Field Communication, Bluetooth Low Energy, iBeacon, low power variants of Wi-Fi, a wireless sensor network and an active or passive RFID technology and wherein preferably activating of the caching device (17) and/or initializing a data transfer is performed by the portable device (10, 10a) by approximation of the portable device (10, 10a) to the caching device (17).

4. The method according to any of claims 1 to 3, wherein activating the caching device (17) with the wireless short range low power technology includes performing service discovery or position information tasks and preferably further comprises the step of identifying the user.

5. The method according to any of claims 1 to 4, wherein transferring the stored downloaded data from the caching device (17) to the portable device (10, 10a) includes transferring of corresponding credentials for the user to access the transferred data and preferably includes a step of deactivating the caching device (17) after transferring the stored downloaded data to the portable device (10, 10a).

6. The method according to any of claims 1 to 5, wherein after activating the host device (16) the method further comprises the step of receiving information about at least one working timer transmitted from and scheduled by the content adaptation and delivery platform (14), wherein each working timer is assigned to one specific data and wherein preferably the data download from the content adaptation and delivery platform (14) to the caching device (17) is performed at predetermined times and more preferably at times with low traffic on an operator network.

7. The method according to any of claims 1 to 6, wherein the method further comprises a step of transferring corresponding credentials for the user to access the adapted data from the content adaptation and delivery platform (14) by the host device (16) and subsequently storing on the caching device (17).

8. The method according to any of claims 1 to 7, wherein after storing the downloaded data on the caching device (17), the method further comprises a step of deactivating the host device (16) and the caching device (17), wherein preferably transferring the downloaded data from the host device (16) to the caching device (17) is done via a wired connection or a wireless connection.

9. The method according to any of claims 1 to 8, wherein the step of adapting the data preferably comprises adapting the data to the capability of the user's access network and/or the capability of a user's portable device (10, 10a), and wherein the step of adapting the data preferably comprises packing the data or parts of it into several container files, and more preferably wherein the container files are buffered at storage equipped nodes of the content adaptation and delivery platform (14) or operator network and scheduled for download by the content adaptation and delivery platform (14) and/or wherein the step of adapting the data preferably includes transcoding the data.

10. The method according to any of claims 1 to 9, wherein obtaining the data is based on diverse rules defined by the user directly at the content broker and/or extracted by the content adaptation and delivery platform (14) taking into account a user technology environment, comprising user devices and access technology, and provided to the content broker or content composition platform (11) and/or wherein the content adaptation and delivery platform (14) preferably generates corresponding credentials for the later use of the data.

11. The method according to any of claims 1 to 10, wherein connecting of a user device comprises providing a user relation and preferably performing the underlying connection to the content broker or the composition platform (11) by means of a portable device (10, 10a) or any other device with online connectivity.

12. The method according to any of claims 1 to 10, wherein the user relation is subsequently defined by at least one of a fixed line identifier, a host device identifier, a caching device identifier, addresses, types or identifiers of a portable device (10, 10a), and preferably by the use of a subscriber identity module or similar component or a card integrated or attached to the respective device.

13. The method according to any of claims 1 to 10, wherein the data is from different content providers (12) and preferably the order is personalized for a specific user and more preferably composed of several pieces of content data.

14. A system for fast content provision and wireless high speed data pick up with a portable device (10, 10a) from a caching device (17), the system being configured to perform the method of any of the claims 1 to 13.

15. A computer program comprising computer program code means adapted to perform the steps of the method of any of claims 1 - 13.

## Patentansprüche

1. Verfahren zum schnellen Bereitstellen von Inhalt und zur drahtlosen Hochgeschwindigkeits-Datenübernahme von einer Zwischenspeichereinrichtung (17) durch ein tragbares Gerät (10, 10a), mit den Schritten:
a) Bestellen von Inhaltsdaten durch einen Benutzer von einem Content-Broker oder einer Zusammenstellungsplattform (11), mit den Schritten:
i. Einrichten einer Verbindung zum Content-Broker oder zur Zusammenstellungsplattform (11);
ii. Initialisieren einer Benutzerbeziehung des Benutzers am Content-Broker oder an der Zusammenstellungsplattform (11);
iii. Zusammenstellen von Daten einer Bestellung durch den Benutzer, unterstützt durch den Content-Broker oder die Zusammenstellungsplattform (11) und mindestens einen Inhaltsanbieter (12);
iv. Bestellen der zusammengestellten Daten vom Content-Broker oder von der Zusammenstellungsplattform (11);
b) Zusammenstellen von Daten durch die Zusammenstellungsplattform (11) basierend auf der Bestellung des Benutzers durch den Content-Broker oder die Zusammenstellungsplattform (11), mit den Schritten:
i. Erhalten von Daten gemäß der Bestellung des Benutzers durch den Content-Broker oder die Zusammenstellungsplattform (11), wobei die Daten von einem Inhaltsanbieter (12) und/oder von öffentlich zugänglichen Inhaltsquellen (13) erhalten werden;
ii. Übertragen der Daten zu einer Inhaltsanpassungs- und -zufuhrplattform (14); und
iii. Anpassen der Daten durch die Inhaltsanpassungs- und -zufuhrplattform (14);
c) Herunterladen von Daten von der Inhaltsanpassungs- und -zufuhrplattform (14) zu einer Zwischenspeichereinrichtung (17), mit den Schritten:
i. automatisches Aktivieren einer Host-Einrichtung (16) zu einer vorgegebenen Zeit;
ii. Herunterladen der angepassten Daten von der Inhaltsanpassungs- und -zufuhrplattform (14) durch die Host-Einrichtung (16);
iii. Übertragen der heruntergeladenen Daten von der Host-Einrichtung (16) zur Zwischenspeichereinrichtung (17); und
iv. Speichern der heruntergeladenen Daten in der Zwischenspeichereinrichtung (17); und
d) drahtlose Hochgeschwindigkeits-Datenübernahme, mit den Schritten:
i. Initialisieren einer Datenübertragung zwischen dem tragbaren Gerät (10, 10a) und der Zwischenspeichereinrichtung (17);
ii. Aktivieren der Zwischenspeichereinrichtung (17), getriggert durch die Initialisierung in Schritt i. unter Verwendung einer drahtlosen leistungsarmen Nahbereichtechnik;
iii. Einrichten einer drahtlosen Verbindung, vorzugsweise mit einer Gbit/s- oder Multi-Gbit/s-Datendurchsatzkapazität zwischen dem tragbaren Gerät (10, 10a) und der Zwischenspeichereinrichtung (17) für eine Datenübertragung; und
iv. Übertragen der gespeicherten heruntergeladenen Daten von der Zwischenspeichereinrichtung (17) zum tragbaren Gerät (10, 10a) unter Verwendung der in Schritt iii. eingerichteten drahtlosen Verbindung, wobei die gespeicherten heruntergeladenen Daten gemäß den Schritten a) bis c) durch den Content-Broker oder die Inhaltzusammenstellungsplattform (11) individuell zusammengestellt und angepasst werden.

2. Verfahren nach Anspruch 1, wobei das Initialisieren einer Datenübertragung durch das tragbare Gerät (10, 10a) zu einer vorgegebenen Zeit und/oder in Antwort auf eine einzelne Betätigung auf dem oder mit dem tragbaren Gerät (10, 10a) durch den Benutzer automatisch ausgeführt wird.

3. Verfahren nach Anspruch 1 oder 2, wobei die drahtlose leistungsarme Nahbereichtechnik zum Aktivieren der Zwischenspeichereinrichtung (17) mindestens eine Technik unter Nahfeldkommunikation, Bluetooth Low Energy, iBeacon, leistungsarmen Varianten von Wi-Fi, einem drahtlosen Sensornetzwerk und einer aktiven oder passiven RFID-Technik ist, und wobei vorzugsweise das Aktivieren der Zwischenspeichereinrichtung (17) und/oder das Initialisieren einer Datenübertragung durch das tragbare Gerät (10, 10a) durch eine Annäherung des tragbaren Geräts (10, 10a) an die Zwischenspeichereinrichtung (17) ausgeführt wird.

4. Verfahren nach einem der Ansprüche 1 bis 3, wobei das Aktivieren der Zwischenspeichereinrichtung (17) durch die drahtlose leistungsarme Nahbereichtechnik das Ausführen von Dienstsuch- oder Positionsinformationsaufgaben und vorzugsweise ferner den Schritt zum Identifizieren des Benutzers aufweist.

5. Verfahren nach einem der Ansprüche 1 bis 4, wobei das Übertragen der gespeicherten heruntergeladenen Daten von der Zwischenspeichereinrichtung (17) zum tragbaren Gerät (10, 10a) das Übertragen entsprechender Anmeldedaten für den Benutzer für einen Zugriff auf die übertragenen Daten aufweist und vorzugsweise einen Schritt zum Deaktivieren der Zwischenspeichereinrichtung (17) nach dem Übertragen der gespeicherten heruntergeladenen Daten zum tragbaren Gerät (10, 10a) aufweist.

6. Verfahren nach einem der Ansprüche 1 bis 5, wobei das Verfahren nach dem Aktivieren der Host-Einrichtung (16) ferner den Schritt zum Empfangen von Information über mindestens einen Arbeitszeitplaner aufweist, der durch die Inhaltsanpassungs- und -zufuhrplattform (14) übertragen und terminiert wird, wobei jeder Arbeitszeitplaner einem spezifischen Datenelement zugewiesen ist, und wobei vorzugsweise das Herunterladen von Daten von der Inhaltsanpassungs- und -zufuhrplattform (14) zur Zwischenspeichereinrichtung (17) zu vorgegebenen Zeiten und vorzugsweise zu Zeiten mit niedrigem Verkehr auf einem Anbieternetzwerk ausgeführt wird.

7. Verfahren nach einem der Ansprüche 1 bis 6, wobei das Verfahren ferner einen Schritt zum Übertragen entsprechender Anmeldedaten für den Benutzer für einen Zugriff auf die angepassten Daten von der Inhaltsanpassungs- und -zufuhrplattform (14) durch das Host-Gerät (16) und zum anschließenden Speichern in der Zwischenspeichereinrichtung (17) aufweist.

8. Verfahren nach einem der Ansprüche 1 bis 7, wobei nach dem Speichern der heruntergeladenen Daten in der Zwischenspeichereinrichtung (17) das Verfahren ferner einen Schritt zum Deaktivieren des Host-Geräts (16) und der Zwischenspeichereinrichtung (17) aufweist, wobei vorzugsweise das Übertragen der heruntergeladenen Daten vom Host-Gerät (16) zur Zwischenspeichereinrichtung (17) über eine drahtgebundene Verbindung oder eine drahtlose Verbindung erfolgt.

9. Verfahren nach einem der Ansprüche 1 bis 8,
wobei der Schritt zum Anpassen der Daten vorzugsweise das Anpassen der Daten an die Leistungsfähigkeit des Zugangsnetzwerks des Benutzers und/oder die Leistungsfähigkeit eines tragbaren Geräts (10, 10a) des Benutzers aufweist, und wobei der Schritt zum Anpassen der Daten vorzugsweise das Verpacken der Daten oder von Teilen davon in mehreren Containerdateien aufweist, und wobei bevorzugter die Containerdateien an mit Speichern ausgestatteten Knoten der Inhaltsanpassungs- und -zufuhrplattform (14) oder eines Betreibernetzwerks gepuffert und für ein Herunterladen durch die Inhaltsanpassungs- und -zufuhrplattform (14) geplant werden, und/oder wobei der Schritt zum Anpassen der Daten vorzugsweise das Transcodieren der Daten aufweist.

10. Verfahren nach einem der Ansprüche 1 bis 9, wobei das Erhalten der Daten auf verschiedenen Regeln basiert, die durch den Benutzer direkt am Content-Broker definiert und/oder durch die Inhaltsanpassungs- und -zufuhrplattform (14) unter Berücksichtigung einer Technologieumgebung des Benutzers extrahiert werden, die Benutzergeräte und Zugangstechnik beinhaltet, und für den Content-Broker oder die Inhaltzusammenstellungsplattform (11) bereitgestellt werden, und/oder wobei die Inhaltsanpassungs- und -zufuhrplattform (14) vorzugsweise entsprechende Anmeldedaten für die spätere Nutzung der Daten erzeugt.

11. Verfahren nach einem der Ansprüche 1 bis 10, wobei das Verbinden eines Benutzergeräts das Bereitstellen einer Benutzerbeziehung und vorzugsweise das Ausführen der zugrundeliegenden Verbindung mit dem Content-Broker oder der Zusammenstellungsplattform (11) durch ein tragbares Gerät (10, 10a) oder ein beliebiges anderes Gerät mit einer Online-Konnektivität aufweist.

12. Verfahren nach einem der Ansprüche 1 bis 10, wobei die Benutzerbeziehung anschließend durch mindestens ein Element unter einer Festnetzidentifizierung, einer Host-Geräteidentifizierung, einer Zwischenspeichereinrichtungsidentifizierung, Adressen, Typen oder Identifizierungen eines tragbaren Geräts (10, 10a) und vorzugsweise durch die Verwendung eines Subscriber Identity Module oder einer ähnlichen Komponente oder einer Karte definiert wird, die mit dem jeweiligen Gerät integriert oder daran befestigt ist.

13. Verfahren nach einem der Ansprüche 1 bis 10, wobei die Daten von verschiedenen Inhaltsanbietern (12) bereitgestellt werden und die Bestellung vorzugsweise für einen spezifischen Benutzer personalisiert ist und noch bevorzugter aus mehreren Elementen von Inhaltsdaten besteht.

14. System für eine schnelle Bereitstellung von Inhalt und zur drahtlosen Hochgeschwindigkeits-Datenübernahme durch ein tragbares Gerät (10, 10a) von einer Zwischenspeichereinrichtung (17), wobei das System dafür konfiguriert ist, das Verfahren nach einem der Ansprüche 1 bis 13 auszuführen.

15. Computerprogramm mit einem Computerprogrammcodemittel, das dazu geeignet ist, die Schritte des Verfahrens nach einem der Ansprüche 1 bis 13 auszuführen.

## Revendications

1. Procédé de fourniture rapide de contenu et de collecte de données à grande vitesse sans fil avec un dispositif portable (10, 10a) à partir d'un dispositif de mise en antémémoire (17) comprenant les étapes de :
a) commande de données de contenu par un utilisateur auprès d'un courtier en contenu ou d'une plateforme de composition (11), comprenant les étapes de :
i. établissement d'une connexion avec le courtier en contenu ou la plateforme de composition (11) ;
ii. initialisation d'une relation utilisateur de l'utilisateur au niveau du courtier en contenu ou de la plateforme de composition (11) ;
iii. composition de données d'une commande par l'utilisateur prise en charge par le courtier en contenu ou la plateforme de composition (11) et au moins un fournisseur de contenu (12) ;
iv. commande des données composées auprès du courtier en contenu ou de la plateforme de composition (11) ;
b) composition de données par la plateforme de composition (11) d'après la commande utilisateur avec le courtier en contenu ou la plateforme de composition (11), comprenant les étapes de :
i. obtention de données selon la commande de l'utilisateur avec le courtier en contenu ou la plateforme de composition (11), dans lequel les données sont obtenues auprès de l'au moins un fournisseur de contenu (12) et/ou de sources de contenu accessibles au public (13) ; et
ii. transfert des données à une plateforme d'adaptation et de distribution de contenu (14) ;
iii. adaptation des données par la plateforme d'adaptation et de distribution de contenu (14) ;
c) téléchargement de données depuis la plateforme d'adaptation et de distribution de contenu (14) vers un dispositif de mise en antémémoire (17), comprenant les étapes de :
i. activation automatique d'un dispositif hôte (16) à un instant prédéterminé ;
ii. téléchargement des données adaptées à partir de la plateforme d'adaptation et de distribution de contenu (14) au moyen du dispositif hôte (16) ;
iii. transfert des données téléchargées du dispositif hôte (16) au dispositif de mise en antémémoire (17) ; et
iv. stockage des données téléchargées sur le dispositif de mise en antémémoire (17) ; et
d) collecte de données à grande vitesse sans fil, comprenant les étapes de :
i. initialisation d'un transfert de données entre le dispositif portable (10, 10a) et le dispositif de mise en antémémoire (17) ;
ii. activation du dispositif de mise en antémémoire (17) déclenchée par l'initialisation de l'étape i en utilisant une technologie de courte portée à faible consommation sans fil ;
iii. établissement d'une connexion sans fil, ayant de préférence une capacité de débit en Gbit/s ou multi-Gbit/s, entre le dispositif portable (10, 10a) et le dispositif de mise en antémémoire (17) pour le transfert de données ; et
iv. transfert des données téléchargées stockées du dispositif de mise en antémémoire (17) au dispositif portable (10, 10a) à l'aide de la connexion sans fil établie à l'étape iii, dans lequel les données téléchargées stockées sont composées et adaptées individuellement selon les étapes a) à c) par le courtier en contenu ou la plateforme de composition de contenu (11).

2. Procédé selon la revendication 1, dans lequel l'initialisation d'un transfert de données est réalisée automatiquement par le dispositif portable (10, 10a) à un instant prédéterminé et/ou en réponse à une seule opération sur ou avec le dispositif portable (10, 10a) par un utilisateur.

3. Procédé selon la revendication 1 ou 2, dans lequel la technologie de courte portée à faible consommation sans fil pour activer le dispositif de mise en antémémoire (17) est au moins l'un parmi une communication en champ proche, une technologie Bluetooth basse énergie, une balise de proximité, des variantes à faible consommation de Wi-Fi, un réseau de capteur sans fil et une technologie RFID active ou passive et dans lequel de préférence l'activation du dispositif de mise en antémémoire (17) et/ou l'initialisation d'un transfert de données sont réalisées par le dispositif portable (10, 10a) par approximation du dispositif portable (10, 10a) au dispositif de mise en antémémoire (17).

4. Procédé selon l'une quelconque des revendications 1 à 3, dans lequel l'activation du dispositif de mise en antémémoire (17) avec la technologie de courte portée à faible consommation sans fil comporte la réalisation de tâches de découverte de service ou d'informations de position et comprend en outre de préférence l'étape d'identification de l'utilisateur.

5. Procédé selon l'une quelconque des revendications 1 à 4, dans lequel le transfert des données téléchargées stockées du dispositif de mise en antémémoire (17) au dispositif portable (10, 10a) comporte le transfert de justificatifs d'identité correspondants pour que l'utilisateur accède aux données transférées et comporte de préférence une étape de désactivation du dispositif de mise en antémémoire (17) après transfert des données téléchargées stockées au dispositif portable (10, 10a).

6. Procédé selon l'une quelconque des revendications 1 à 5, dans lequel après activation du dispositif hôte (16) le procédé comprend en outre l'étape de réception d'informations concernant au moins une base de temps de travail transmises depuis et programmées par la plateforme d'adaptation et de distribution de contenu (14), dans lequel chaque base de temps de travail est attribuée à une donnée spécifique et dans lequel de préférence le téléchargement de données de la plateforme d'adaptation et de distribution de contenu (14) au dispositif de mise en antémémoire (17) est réalisé à des instants prédéterminés et de manière davantage préférée à des instants avec un faible trafic sur un réseau de l'opérateur.

7. Procédé selon l'une quelconque des revendications 1 à 6, dans lequel le procédé comprend en outre une étape de transfert de justificatifs d'identité correspondants pour que l'utilisateur accède aux données adaptées à partir de la plateforme d'adaptation et de distribution de contenu (14) par le dispositif hôte (16) et ensuite de stockage sur le dispositif de mise en antémémoire (17).

8. Procédé selon l'une quelconque des revendications 1 à 7, dans lequel après stockage des données téléchargées sur le dispositif de mise en antémémoire (17), le procédé comprend en outre une étape de désactivation du dispositif hôte (16) et du dispositif de mise en antémémoire (17), dans lequel de préférence le transfert des données téléchargées du dispositif hôte (16) au dispositif de mise en antémémoire (17) se fait via une connexion filaire ou une connexion sans fil.

9. Procédé selon l'une quelconque des revendications 1 à 8,
dans lequel l'étape d'adaptation des données comprend de préférence l'adaptation des données à la capacité du réseau d'accès de l'utilisateur et/ou à la capacité d'un dispositif portable (10, 10a) de l'utilisateur, et dans lequel l'étape d'adaptation des données comprend de préférence le tassement des données ou de parties de celles-ci dans plusieurs fichiers conteneurs, et de manière davantage préférée dans lequel les fichiers conteneurs sont mis en mémoire tampon au niveau de noeuds équipés de stockage de la plateforme d'adaptation et de distribution de contenu (14) ou du réseau de l'opérateur et programmés pour être téléchargés par la plateforme d'adaptation et de distribution de contenu (14) et/ou dans lequel l'étape d'adaptation des données comporte de préférence le transcodage des données.

10. Procédé selon l'une quelconque des revendications 1 à 9, dans lequel l'obtention des données est basée sur diverses règles définies par l'utilisateur directement au niveau du courtier en contenu et/ou extraites par la plateforme d'adaptation et de distribution de contenu (14) en prenant en compte un environnement technologique de l'utilisateur, comprenant des dispositifs utilisateur et une technologie d'accès, et fourni au courtier en contenu ou à la plateforme de composition de contenu (11) et/ou dans lequel la plateforme d'adaptation et de distribution de contenu (14) génère de préférence des justificatifs d'identité correspondants pour l'utilisation ultérieure des données.

11. Procédé selon l'une quelconque des revendications 1 à 10, dans lequel la connexion d'un dispositif utilisateur comprend la fourniture d'une relation utilisateur et de préférence la réalisation de la connexion sous-jacente au courtier en contenu ou à la plateforme de composition (11) au moyen d'un dispositif portable (10, 10a) ou de tout autre dispositif avec une connectivité en ligne.

12. Procédé selon l'une quelconque des revendications 1 à 10, dans lequel la relation utilisateur est définie ensuite par au moins l'un parmi un identifiant de ligne fixe, un identifiant de dispositif hôte, un identifiant de dispositif de mise en antémémoire, des adresses, des types ou des identifiants d'un dispositif portable (10, 10a), et de préférence par l'utilisation d'un module d'identité d'abonné ou d'un composant similaire ou d'une carte intégrée ou fixée au dispositif respectif.

13. Procédé selon l'une quelconque des revendications 1 à 10, dans lequel les données proviennent de fournisseurs de contenu (12) différents et de préférence la commande est personnalisée pour un utilisateur spécifique et de manière davantage préférée composée de plusieurs éléments de données de contenu.

14. Système de fourniture de contenu rapide et de collecte de données grande vitesse sans fil avec un dispositif portable (10, 10a) à partir d'un dispositif de mise en antémémoire (17), le système étant configuré pour réaliser le procédé selon l'une quelconque des revendications 1 à 13.

15. Programme d'ordinateur comprenant un moyen de code de programme d'ordinateur adapté pour réaliser les étapes du procédé selon l'une quelconque des revendications 1 à 13.
